# EUROPÄISCHE PATENTSCHRIFT

(11) **EP 1 873 596 B1**
(45) Veröffentlichungstag und Bekanntmachung des Hinweises auf die Patenterteilung: **21.10.2009**
(21) Anmeldenummer: 06013696.7
(22) Anmeldetag: 01.07.2006
(51) Int. Cl.: G05B 15/02, G05B 23/02

(54) **Tragbarer Funkfernsteuerungssender mit beleuchteten Tasten**
Portable radio remote control transmitter with backlit pushbuttons
Télécommande portable avec des boutons illuminés

(43) Veröffentlichungstag der Anmeldung: 02.01.2008
(73) Patentinhaber: NBB Controls + Components AG, 75248 Ölbronn-Dürrn (DE)
(72) Erfinder: Bredow, Wolfgang, 75223 Niefern-Öschelbronn (DE); Burchard, Thomas, 75177 Pforzheim (DE)
(74) Vertreter: Hoeger, Stellrecht & Partner Patentanwälte

(56) Entgegenhaltungen:
- EP-A- 0 685 954
- EP-A- 1 583 122
- DE-A1- 4 236 062
- DE-A1- 10 031 665
- DE-U1- 8 413 936
- US-A1- 2005 248 930

## Beschreibung

Die Erfindung betrifft einen tragbaren Funkfernsteuerungssender.

Tragbare Funkfernsteuerungssender mit einem spritzwasser- und staubdichten Gehäuse, das eine Steuereinheit aufnimmt und ein Bedienfeld mit mehreren Tasten zum Eingeben von Steuerbefehlen umfasst, kommen zum Beispiel zur Fernsteuerung industrieller und landwirtschaftlicher, insbesondere forstwirtschaftlicher Maschinen, zum Einsatz. Sie werden aber auch zur Fernsteuerung von Aufbauten von Lastkraftwägen eingesetzt, wie sie beispielsweise die Feuerwehr verwendet. Der Funkfernsteuerungssender weist mehrere Tasten auf, die zum Eingeben von Steuerbefehlen betätigt werden können. Die Befehle werden von der Steuereinheit über eine Funkverbindung an einen Empfänger übertragen, der dem Funkfernsteuerungssender zugeordnet ist. Die Tasten tragen üblicherweise ein Kennzeichnungselement, beispielsweise ein Piktogramm, das den jeweiligen Steuerbefehl veranschaulicht, der durch Betätigung der Taste übertragen wird. Zur Bedienung des Funkfemsteuerungssenders ist es deshalb erforderlich, dass der Bediener die Kennzeichnungselemente einwandfrei erkennen kann, da ansonsten die Gefahr einer fehlerhaften Bedienung des Funkfernsteuerungssenders besteht.

Aus der EP 1583122 A1 ist ein Codeschloss für Garagen- und Hoftore bekannt mit einem Gehäuse, dessen Öffnung von einer Glasplatte abgedeckt ist. An einem die Glasplatte überragenden Vordach des Gehäuses ist eine Beleuchtung mit Leuchtdioden angeordnet. Auf der Rückseite der Glasplatte befinden sich elektrische Einrichtungen, insbesondere ein Funksender und ein Funkempfänger. Durch die Glasplatte hindurch sind ein Tastenfeld und Anzeigen erkennbar. Das Tastenfeld besteht aus Sensortasten, bei denen durch Berührung die Kapazität einer Sensorfläche geändert wird. Mittels des Vordaches ist das Tastenfeld vor Spritzwasser geschützt.

In der DE 42 36 062 A1 wird ein Pflanzenspritzgerät beschrieben, das mittels eines Handsenders gesteuert werden kann. Der Handsender weist ein wasserdichtes Gehäuse auf, in dem ein Sender angeordnet ist und dessen Oberseite mit Druckknopfschaltern versehen ist zur Eingabe von Steuerbefehlen.

Aus der US 2005/0248930 A1 ist ein Suchstrahler bekannt, der mittels einer Fernsteuereinheit bedient werden kann. Letztere umfasst eine Tastatur, die bei Betätigung einer Taste für zehn Sekunden beleuchtet wird.

Ein tragbares Telefon mit einem beleuchtbaren Tastenfeld wird in der EP 0685954 A2 beschrieben. Das Tastenfeld wird von Tastknöpfen gebildet, die auf einer Schaltmatte angeordnet sind, welche auf einer Leiterplatte positioniert ist. Schaltmatte und Leiterplatte bilden eine Schichtstruktur aus, die von einer Gehäuseschale aufgenommen wird. Die Gehäuseschale übergreift die Schichtstruktur auf deren Vorderseite. Innenseitig weist die Gehäuseschale mehrere im Abstand zueinander angeordnete Rastvorsprünge auf, die die Schichtstruktur an einzelnen Fixierungsbereichen hintergreifen.

Aufgabe der vorliegenden Erfindung ist es, einen tragbaren Funkfernsteuerungssender der eingangs genannten Art derart weiterzubilden, dass die Gefahr einer fehlerhaften Bedienung des Funkfernsteuerungssenders reduziert wird und das Beleuchtungselement auf einfache Weise vor Spritzwasser und Staub geschützt ist.

Diese Aufgabe wird durch einen tragbaren Funkfernsteuerungssender mit den Merkmalen von Patentanspruch 1 gelöst. Durch die Beleuchtung der Tasten kann die Gefahr einer fehlerhaften Bedienung erheblich vermindert werden. Dies gilt insbesondere bei Einsatz des Funkfernsteuerungssenders in der Nacht oder in schlecht beleuchteter Umgebung.

Die den Tasten zugeordneten Beleuchtungselemente sind im Gehäuse auf einer Leiterplatte angeordnet. Als Beleuchtungselement kommt vorzugsweise eine lichtemittierende Diode zum Einsatz, die an der Leiterplatte festgelegt ist.

Der Funkfernsteuerungssender weist ein Dichtelement auf, das eine Leiterplatte zusammen mit dem mindestens einen Beleuchtungselement umgreift und zumindest bereichsweise lichtdurchlässig ausgestaltet ist, beispielsweise aus einem lichtdurchlässigen Material gefertigt ist. Dies gibt die Möglichkeit, das mindestens eine Beleuchtungselement in dem Bereich der Leiterplatte anzuordnen, der vom Dichtungselement umgriffen ist, so dass das Beleuchtungselement auf einfache Weise vor Spritzwasser und Staub geschützt ist, und gleichzeitig kann die vom Beleuchtungselement ausgehende Lichtstrahlung durch das Dichtelement hindurch auf die zugeordnete Taste gerichtet werden.

Es kann vorgesehen sein, dass mit Hilfe eines einzigen Beleuchtungselementes mehrere Tasten, insbesondere alle Tasten des Funkfernsteuerungssenders, beleuchtbar sind. Von Vorteil ist es jedoch, wenn der Funkfernsteuerungssender mehrere Beleuchtungselemente aufweist, die jeweils einer oder mehreren Tasten zugeordnet sind. Dies ermöglicht eine gleichmäßigere Beleuchtung der Tasten und gibt darüber hinaus die Möglichkeit, die Tasten in Abhängigkeit von ihrer Betätigung unterschiedlich zu beleuchten. Außerdem können verschieden farbige Beleuchtungselemente zu Einsatz kommen.

Günstig ist es, wenn mindestens einer Taste mehrere verschieden farbige Beleuchtungselemente zugeordnet sind, denn dies vereinfacht die Handhabung des Funkfernsteuerungssenders. Beispielsweise können je nach eingegebenem Steuerbefehl unterschiedliche Beleuchtungselemente aktiviert werden.

Es kann auch vorgesehen sein, dass dem mindestens einen Beleuchtungselement ein Lichtleiter zugeordnet ist, um die vom Beleuchtungselement ausgehende Lichtstrahlung zu der zugeordneten Taste zu führen.

Günstig ist es, wenn mindestens eine Taste zumindest bereichsweise lichtdurchlässig ausgestaltet ist, zum Beispiel aus einem lichtdurchlässigen Material gefertigt ist. Dies ermöglicht es, die Taste zu durchleuchten. Die Taste kann ein Kennzeichnungselement tragen, beispielsweise ein Piktogramm, ein Buchstabe und/oder eine Ziffer.

Vorzugsweise ist zumindest einer Taste ein auf der Leiterplatte angeordnetes Schnappelement zugeordnet, das durch Ausüben einer Betätigungskraft aus einer ersten, mechanisch stabilen Form in eine zweite Form überführbar ist, wobei neben dem Schnappelement ein Beleuchtungselement angeordnet ist. Der Einsatz eines Schnappelementes ermöglicht eine besonders prägnante Tastwahrnehmung bei der Betätigung der Taste. Das Schnappelement kann beispielsweise als Schnappscheibe ausgestaltet sein, die durch Ausüben einer Betätigungskraft aus einer stabilen Form in eine mechanisch instabile Form übergeht, so dass sie bei Wegfall der Betätigungskraft selbsttätig wieder ihre stabile Form einnimmt. Durch die Formänderung des Schnappelementes kann ein der Taste zugeordneter Schaltkontakt auf einfache Weise geöffnet und geschlossen werden. Neben dem Schnappelement ist ein Beleuchtungselement angeordnet, mit dem die dem Schnappelement zugeordnete Taste beleuchtet werden kann.

Von Vorteil ist es, wenn ein die Leiterplatine umgreifendes Dichtungselement als Schaltmatte ausgebildet ist, die unterseitig, jeweils einem Schnappelement zugeordnet, einen Vorsprung und oberseitig eine Taste trägt und die zumindest bereichsweise lichtdurchlässig ausgestaltet ist, zum Beispiel aus einem lichtdurchlässigen Material gebildet ist. Die Schaltmatte trägt die Tasten des Bedienfeldes und wird bei Betätigung einer Taste mit ihrem zugeordneten Vorsprung gegen das mit der Taste zusammenwirkende Schnappelement gedrückt, so dass dieses seine Form ändert und dadurch ein Schaltkontakt geschlossen werden kann.

Eine besonders einfache Handhabung wird bei einer vorteilhaften Ausführungsform des erfindungsgemäßen Funkfernsteuerungssenders dadurch erzielt, dass durch Betätigung von einer Taste mehrere Tasten beleuchtbar sind. Insbesondere kann vorgesehen sein, dass durch Betätigung von einer Taste sämtliche Tasten des Bedienfeldes beleuchtbar sind.

Die Beleuchtung der Tasten kann dauerhaft erfolgen. Beispielsweise kann vorgesehen sein, dass beim Einschalten des Funkfernsteuerungssenders selbsttätig alle Tasten des Bedienfeldes so lange beleuchtet werden, bis der Funkfernsteuerungssender wieder ausgeschaltet wird.

Alternativ oder ergänzend kann vorgesehen sein, dass durch Betätigung von einer Taste mehrere Tasten des Bedoenfeldes für eine vorgegebenen Beleuchtungszeit beleuchtbar sind. So kann das mindestens eine Beleuchtungselement beispielsweise derart steuerbar sein, dass durch Betätigung von einer Taste sämtliche Tasten des Bedienfeldes für eine vorgebbare Beleuchtungszeit beleuchtbar sind. Nach Ablauf der Beleuchtungszeit wird die Beleuchtung der Tasten selbsttätig wieder ausgeschaltet.

Günstig ist es, wenn nach Betätigung einer Taste die Beleuchtungszeit durch eine erneute Betätigung einer Taste neu gestartet werden kann. Wird eine erste Taste betätigt, so werden die Tasten für eine Beleuchtungszeit von beispielsweise 20 Sekunden beleuchtet. Wird noch innerhalb dieser 20 Sekunden erneut die erste oder eine andere Taste betätigt, so wird die Beleuchtungszeit neu gestartet, d.h. die Beleuchtung der Tasten erfolgt erneut für 20 Sekunden.

Bei einer besonders bevorzugten Ausführungsform sind durch Betätigung einer beliebigen Taste sämtliche Tasten des Bedienfeldes vorzugsweise für eine vorgebbare Zeit beleuchtbar. Dies ermöglicht eine besonders einfache Handhabung des Funkfernsteuerungssenders auch bei schlechten Sichtverhältnissen. Wird eine beliebige Taste gedrückt, so leuchten sämtliche Tasten des Bedienfeldes beispielsweise für 20 Sekunden auf und können dadurch vom Bediener eindeutig erkannt werden.

Von besonderem Vorteil ist es, wenn die Beleuchtungszeit durch den Benutzer vorgebbar ist.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung eines erfindungsgemäßen tragbaren Funkfernsteuerungssenders und
- Figur 2:: eine teilweise Schnittansicht längs der Linie 2-2 in Figur 1.

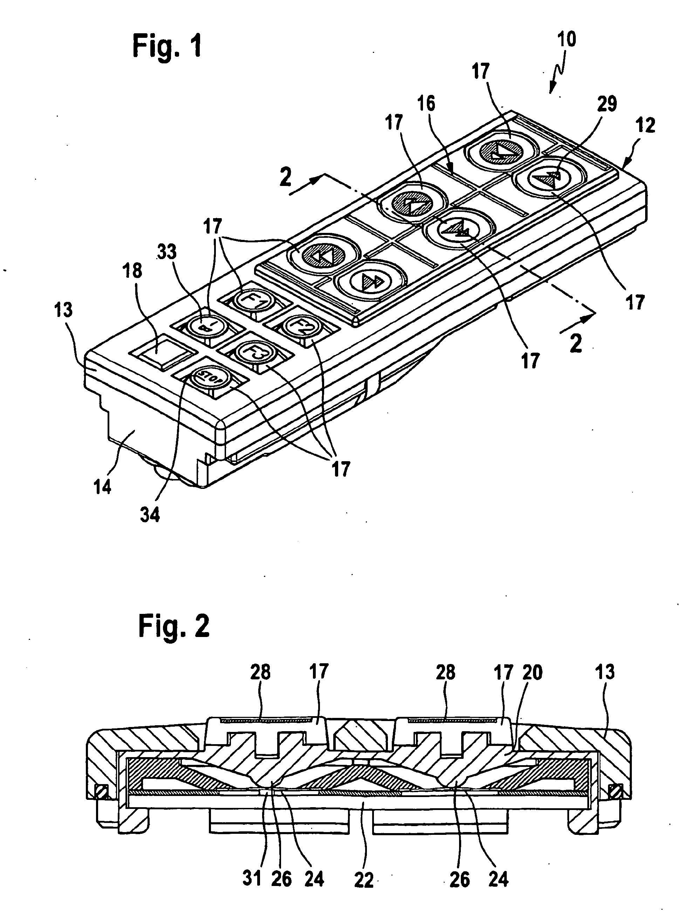

In der Zeichnung ist schematisch ein insgesamt mit dem Bezugszeichen 10 belegter tragbarer Funkfernsteuerungssender dargestellt mit einem zweiteiligen Gehäuse 12, das eine obere Gehäuseschale 13 und eine untere Gehäuseschale 14 umfasst. Die obere Gehäuseschale 13 bildet einen Deckel aus und trägt ein Bedienfeld 16 mit mehreren Tasten 17 und mit einem elektrischen Anzeigeelement 18 in Form einer 7-Segment-Anzeige. Die Tasten 17 sind an der Oberseite eines als Schaltmatte 20 ausgebildeten flexiblen Dichtungselements angeordnet, das eine innerhalb des Gehäuses 12 positionierte Leiterplatte 22 umgreift. Die Leiterplatte 22 ist zwischen der oberen und der unteren Gehäuseschale 13 bzw. 14 angeordnet. Zur Erzielung einer besseren Übersicht ist in Figur 2 die untere Gehäuseschale 14 nicht dargestellt.

Fluchtend zu den Tasten 17 trägt die Leiterplatte 22 Kontaktelemente in Form von Schnappscheiben 24, die durch Ausüben einer Betätigungskraft aus einer ersten, mechanisch stabilen Form in eine zweite, mechanisch instabile Form überführbar sind. Jeweils einer Schnappscheibe 24 zugeordnet weist die Schaltmatte 20 auf ihrer Unterseite einen kugeligen Vorsprung 26 auf, der fluchtend zur jeweiligen Taste 17 angeordnet ist. Somit kann durch Betätigung einer Taste 17 die Schaltmatte 20 verformt und dadurch die zugeordnete Schnappscheibe 24 in ihre instabile Form überführt werden, in der sie auf der Leiterplatte 22 angeordnete Kontaktfelder leitend miteinander verbindet und dadurch einen Schaltkontakt schließt.

Die untere Gehäuseschale 14 nimmt eine an sich bekannte und deshalb zur Erzielung einer besseren Übersicht in der Zeichnung nicht dargestellte Steuereinheit auf, die mit den Kontaktfeldern, die den Schnappscheiben 24 zugeordnet sind, verbunden ist und ein Sendeglied aufweist zum Ausgeben von Funksignalen. Durch Betätigung einer Taste 17 kann somit ein dieser zugeordneter Steuerbefehl drahtlos an einen Empfänger übertragen werden, der dem Funkfernsteuerungssender 10 zugeordnet ist.

Die Tasten 17 tragen oberseitig jeweils ein Kennzeichnungselement in Form eines Aufklebers 28, auf den ein Piktogramm 29 oder eine Kombination aus Buchstaben und/oder Zahlen aufgedruckt ist.

Neben den Vorsprüngen 26 sind auf der Oberseite der Leiterplatte 12 eine Vielzahl von Beleuchtungselementen in Form von lichtemittierenden Dioden 31 angeordnet, die jeweils einer Taste 17 zugeordnet sind. Die Schaltmatte 20 und auch die Tasten 17 sind aus einem lichtdurchlässigen Material gefertigt, so dass die von den lichtemittierenden Dioden 31 ausgehende Lichtstrahlung durch die Schaltmatte 20 und die Tasten 17 hindurch treten und oberseitig aus dem Gehäuse 12 austreten kann. Dadurch werden die jeweiligen Tasten 17 beleuchtet. Die Piktogramme 29 sind somit ebenso wie die Beschriftung der Tasten 17 auch bei schlechten Sichtbedingungen vom Benutzer gut erkennbar.

Eine der Tasten 17 bildet eine Einschalttaste 33, durch deren Betätigung der der Funkfernsteuerungssender 10 eingeschaltet werden kann. Dies hat zur Folge, dass sämtliche lichtemittierende Dioden 31 für eine vorgegebene Beleuchtungszeit, die beispielsweise 20 Sekunden betragen kann, leuchten und somit sämtliche Tasten 17 gut erkennbar sind. Nach Ablauf der Beleuchtungszeit wird die Stromzufuhr der lichtemittierenden Dioden 31 selbsttätig unterbrochen, falls innerhalb der Beleuchtungszeit nicht erneut eine Taste 17 betätigt wird. Ist letzteres der Fall, so wird die Beleuchtungszeit erneut gestartet. Alternativ kann vorgesehen sein, dass durch Betätigung der Einschalttaste 33 die lichtemittierenden Dioden 31 so lange leuchten, bis der Funkfernsteuerungssender 10 mittels einer Ausschalttaste 34 ausgeschaltet wird. Die Steuerung der lichtemittierenden Dioden erfolgt durch die in der Zeichnung aus Gründen einer besseren Übersicht nicht dargestellte Steuereinheit.

Der erfindungsgemäße Funkfernsteuerungssender 10 zeichnet sich somit durch eine sehr einfache Handhabung aus, wobei die Gefahr einer fehlerhaften Bedienung reduziert ist, da mittels der lichtemittierenden Dioden 31 sämtliche Tasten 17 beleuchtet werden können.

## Patentansprüche

1. Tragbarer Funkfernsteuerungssender mit einem spritzwasser- und staubdichten Gehäuse (12), das eine Steuereinheit aufnimmt und das ein Bedienfeld (16) mit mehreren Tasten (17) zum Eingeben von Steuerbefehlen umfasst, **dadurch gekennzeichnet, dass** jeder Taste (17) mindestens ein Beleuchtungselement (31) zur Beleuchtung der Taste (17) zugeordnet ist und das mindestens eine Beleuchtungselement (31) auf einer Leiterplatte (22) angeordnet ist, und dass der Funkfernsteuerungssender (10) ein Dichtelement (20) aufweist, das die Leiterplatte (22) zusammen mit dem mindestens einen Beleuchtungselement (31) umgreift und zumindest bereichsweise lichtdurchlässig ausgestaltet ist.

2. Tragbarer Funkfernsteuerungssender nach Anspruch 1, wobei der Funkfernsteuerungssender (10) mehrere Beleuchtungselemente (31) aufweist, die einer oder mehreren Tasten (17) zugeordnet sind.

3. Tragbarer Funkfernsteuerungssender nach einem der voranstehenden Ansprüche, wobei mindestens eine Taste (17) zumindest bereichsweise lichtdurchlässig ausgestaltet ist.

4. Tragbarer Funkfernsteuerungssender nach einem der voranstehenden Ansprüche, wobei zumindest einer Taste (17) ein auf der Leiterplatte (22) angeordnetes Schnappelement (24) zugeordnet ist, das durch Ausüben einer Betätigungskraft aus einer ersten, mechanisch stabilen Form in eine zweite Form überführbar ist, und wobei neben dem Schnappelement (24) ein Beleuchtungselement (31) angeordnet ist.

5. Tragbarer Funkfernsteuerungssender nach einem der voranstehenden Ansprüche, wobei durch Betätigung von einer Taste (17) mehrere Tasten (17) des Bedienfeldes (16) beleuchtbar sind.

6. Tragbarer Funkfernsteuerungssender nach einem der voranstehenden Ansprüche, wobei durch Betätigung von einer Taste (17) mehrere Tasten (17) des Bedienfeldes (16) für eine vorgegebene Beleuchtungszeit beleuchtbar sind.

7. Tragbarer Funkfernsteuerungssender nach Anspruch 6, wobei nach Betätigung einer ersten Taste (17) die Beleuchtungszeit durch erneute Betätigung einer Taste (17) neu gestartet werden kann.

8. Tragbarer Funkfernsteuerungssender nach Anspruch 5, 6 oder 7, wobei durch Betätigung einer beliebigen Taste (17) sämtliche Tasten (17) des Bedienfeldes (16) beleuchtbar sind.

## Claims

1. Portable radio remote control transmitter with a splash-proof and dust-tight housing (12), which accommodates a control unit and comprises an operator control panel (16) with a number of buttons (17) for entering control commands, **characterized in that** at least one illuminating element (31) is associated with each button (17) for illuminating the button (17), and the at least one illuminating element (31) is disposed on a printed circuit board (22), and **in that** the radio remote control transmitter (10) has a sealing element (20), which embraces the printed circuit board (22) together with the at least one illuminating element (31) and is formed so as to be translucent, at least in some regions thereof.

2. Portable radio remote control transmitter in accordance with claim 1, wherein the radio remote control transmitter (10) has a number of illuminating elements (31), which are associated with one or more buttons (17).

3. Portable radio remote control transmitter in accordance with any one of the preceding claims, wherein at least one button (17) is formed so as to be translucent, at least in some regions thereof.

4. Portable radio remote control transmitter in accordance with any one of the preceding claims, wherein there is associated with at least one button (17) a snap-action element (24), which is disposed on the printed circuit board (22) and can be transferred from a first, mechanically stable form to a second form by exerting an actuating force, and wherein an illuminating element (31) is disposed next to the snap-action element (24).

5. Portable radio remote control transmitter in accordance with any one of the preceding claims, wherein a number of buttons (17) of the operator control panel (16) can be illuminated by actuation of one button (17).

6. Portable radio remote control transmitter in accordance with any one of the preceding claims, wherein a number of buttons (17) of the operator control panel (16) can be illuminated for a predetermined illuminating time by actuation of one button (17).

7. Portable radio remote control transmitter in accordance with claim 6, wherein after actuation of a first button (17), the illuminating time can be re-started by renewed actuation of a button (17).

8. Portable radio remote control transmitter in accordance with claim 5, 6 or 7, wherein all the buttons (17) of the operator control panel (16) can be illuminated by actuation of any button (17).

## Revendications

1. Émetteur à télécommande radio portable comprenant un boîtier (12) étanche aux projections d'eau et aux poussières qui reçoit une unité de commande et comporte un clavier (16) avec plusieurs touches (17) pour l'entrée d'instructions de commande, **caractérisé en ce qu'**au moins un élément d'illumination (31) est associé à chaque touche (17) pour l'illumination de la touche (17) et le au moins un élément d'illumination (31) est disposé sur une carte imprimée (22), et que l'émetteur à télécommande radio (10) présente un élément d'étanchéité (20) qui entoure la carte imprimée (22) avec le au moins un élément d'illumination (31) et présente une configuration translucide au moins par zones.

2. Émetteur à télécommande radio portable suivant la revendication 1, dans lequel l'émetteur à télécommande radio (10) présente plusieurs éléments d'illumination (31) qui sont associés à une ou plusieurs touches (17).

3. Émetteur à télécommande radio portable suivant l'une des revendications précédentes, dans lequel au moins une touche (17) présente une configuration translucide au moins par zones.

4. Émetteur à télécommande radio portable suivant l'une des revendications précédentes, dans lequel un élément à déclic (24), disposé sur la carte imprimée (22), est associé à au moins une touche (17), lequel élément peut être transformé par une force d'actionnement d'une première forme mécaniquement stable en une seconde forme, et dans lequel un élément d'illumination (31) est disposé à côté de l'élément à déclic (24).

5. Émetteur à télécommande radio portable suivant l'une des revendications précédentes, dans lequel plusieurs touches (17) du clavier (16) peuvent être illuminées par actionnement d'une touche (17).

6. Émetteur à télécommande radio portable suivant l'une des revendications précédentes, dans lequel plusieurs touches (17) du clavier (16) peuvent être illuminées pour une durée d'illumination prédéfinie par actionnement d'une touche (17).

7. Émetteur à télécommande radio portable suivant la revendication 6, dans lequel, après l'actionnement d'une première touche (17), la durée d'illumination peut être redémarrée par un nouvel actionnement d'une touche (17).

8. Émetteur à télécommande radio portable suivant l'une des revendications 5, 6 et 7, dans lequel toutes les touches (17) du clavier (16) peuvent être illuminées par actionnement d'une touche quelconque (17).
